# EUROPEAN PATENT APPLICATION

(11) **EP 2 144 187 A2**
(43) Date of publication of application: **13.01.2010**
(21) Application number: 09251784.6
(22) Date of filing: 13.07.2009
(51) Int. Cl.: G06K 7/00, G06K 19/07, A45C 13/18, B64F 1/36, G06F 13/00, G06F 21/00, G07C 9/00, G08B 13/14, H04L 29/00, G06Q 10/00

(54) **Identification system and method**

(30) Priority: 11.07.2008 GB 0812746
(71) Applicant: Janina International Limited, London SE23 2LX (GB)
(72) Inventor: Mehmet, Ahmet Ersal, London SE23 1PL (GB)
(74) Representative: Boden, Keith McMurray

(57) **Abstract**

A system for alerting a user to the presence of objects (7a,b), preferably items of baggage, when within a predetermined proximity of the user, wherein the system comprises an object which includes a Bluetooth (RTM) transmitter (5a,b) which transmits a pre-assigned identification signal, and a mobile telephone (3) which incorporates a Bluetooth (RTM) module which receives the pre-assigned identification signal from the transmitter of the object when within a predetermined proximity of the user and provide the user with a prompt to the presence of the object in response to receipt of the identification signal.

## Description

The present invention relates to a system for and a method of identifying objects, in particular items of baggage, such as when being returned on a baggage carousel or when located together with lots of other baggage.

Typically, baggage is returned to passengers on a carousel, and passengers can wait some time at the carousel, which can be crowded with passengers, all waiting the return of their baggage, leading to jostling and an uncomfortable experience.

It is one aim of the present invention to provide a system for and a method of identifying items of baggage belonging to a passenger as it arrives on a carousel, thus providing for much more efficient retrieval of baggage from the carousel, in that the passenger is alerted as to when his/her baggage is on or approaching the carousel, whereby the passenger need only approach the carousel when alerted.

It is another aim of the present invention to provide a system for and a method of identifying baggage when located together with other baggage and particularly where there are separate lots of baggage, as can, for example, occur in the event of failure of the baggage handling system. By enabling identification of his/her baggage within a predetermined proximity, the passenger can be sure that his/her baggage is in a particular lot, thereby avoiding wasted effort in retrieving his/her baggage.

The present invention also has application in relation to the identification of objects in general, such as packages, containers and other objects which are transported or moved. By providing for identification of an object when within a predetermined proximity, the present invention enables a user to identify the object as being within the predetermined proximity, thereby enabling easy or easier identification.

In one aspect the present invention provides a system for alerting a user to the presence of objects, In particular items of baggage, when within a predetermined proximity of the user, wherein the system comprises at least one object which includes a Bluetooth (RTM) transmitter which transmits a pre-assigned identification signal, and a mobile telephone which incorporates a Bluetooth (RTM) module which is operative to receive the pre-assigned identification signal from the transmitter of the at least one object when within a predetermined proximity of the user and provide the user with a prompt to the presence of the at least one object in response to receipt of the pre-assigned identification signal.

In one embodiment the objects are items of baggage.

In one embodiment the prompt is one or both of a visual or an audible prompt.

In one embodiment the transmitter is located within the object.

In another embodiment the transmitter is built in to the object.

In a further embodiment the transmitter is attached to the object, such as in the form of a tag.

In one embodiment the transmitter is a re-usable device and includes a replaceable or re-chargeable power source.

In another embodiment the transmitter is a single-use device.

In one embodiment the transmitter includes a movement sensor which is operative to control the transmission of the identification signal.

In one embodiment the movement sensor is operative such that the identification signal is transmitted only for a predetermined period following becoming stationary and transmission of the identification signal is commenced following subsequent movement.

In another aspect the present invention provides a method of alerting a user to the presence of objects, in particular items of baggage, when within a predetermined proximity of the user, the method comprising the steps of: providing at least one object with a Bluetooth (RTM) transmitter which transmits a pre-assigned identification signal; providing a user with a mobile telephone which incorporates a Bluetooth (RTM) module which is operative to receive the pre-assigned identification signal from the transmitter of the at least one object when within a predetermined proximity of the user and provide the user with a prompt to the presence of the at least one object in response to receipt of the pre-assigned identification signal; and alerting the user with a prompt to the presence of the at least one object in response to receipt of the pre-assigned identification signal by the mobile telephone.

In one embodiment the prompt is one or both of a visual or an audible prompt.

In one embodiment the transmitter is located within the object.

In another embodiment the transmitter is built in to the object.

In a further embodiment the transmitter is attached to the object, such as in the form of a tag.

In one embodiment the transmitter is a re-usable device and includes a replaceable or re-chargeable power source.

In another embodiment the transmitter is a single-use device.

In one embodiment the transmitter includes a movement sensor which is operative to control the transmission of the identification signal.

In one embodiment the method further comprises the steps of: transmitting the pre-assigned identification signal only for a predetermined period following the movement sensor detecting the object becoming stationary; and commencing transmission of the pre-assigned identification following the movement sensor detecting subsequent movement of the object.

In one embodiment the at least one object is an item of baggage.

In one embodiment the method further comprises the step of: delivering the at least one item of baggage onto a baggage conveyor, such as a baggage carousel; wherein the user is alerted to the at least one item of baggage being in the predetermined proximity of the user when approaching or being delivered onto the baggage conveyor.

In another embodiment the method further comprises the step of: delivering the at least one item of baggage to a location in a facility; and the user moving with the mobile telephone to the at least one item of baggage; wherein the user is alerted to the at least one item of baggage being in the predetermined proximity of the user when the user moves within the predetermined proximity to the at least one item of baggage.

In a further aspect the present invention provides a baggage tag incorporating a Bluetooth (RTM) transmitter for transmitting an identification signal pre-assigned to a mobile telephone.

A preferred embodiment of the present invention will now be described hereinbelow by way of example only with reference to the accompanying drawings, in which:

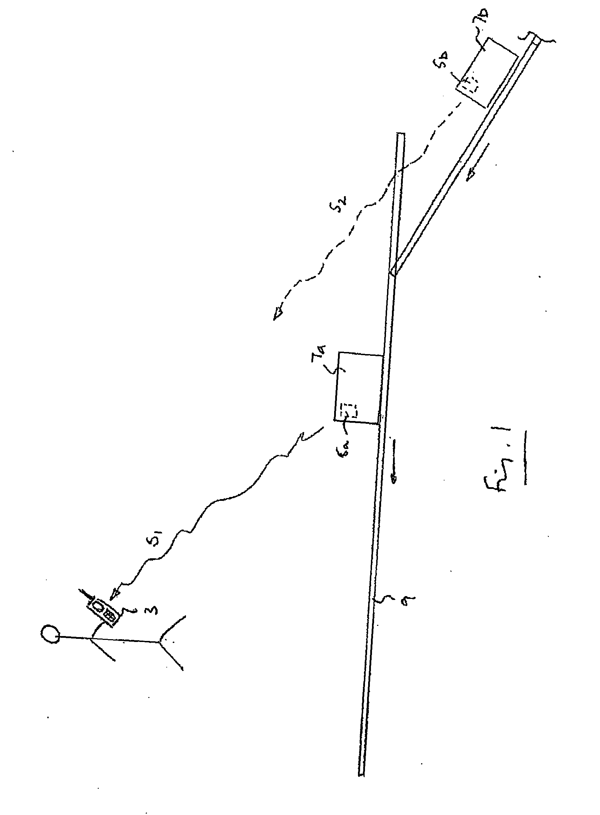

Figure 1 illustrates an identification system in accordance with a preferred embodiment of the present invention.

The system comprises a mobile telephone 3, often alternatively referred to as a cell phone, which belongs to a user and incorporates a Bluetooth (RTM) module, and at least one, in this embodiment a plurality of transmitter units 5a, b, in this embodiment Bluetooth (RTM) transmitters, which are each attached to or incorporated in an item of baggage 7a, b and transmit an identification signal S₁, S₂ for receipt by the mobile telephone 3.

In this embodiment the identification signals S₁, S₂ include pre-defined identifiers which are known to the mobile telephone 3, such that, when one of the transmitter units 5a, b enters within a pre-defned proximity of the mobile telephone 3, the mobile telephone 3 provides the user with an alert, in the form of an audible and/or visual prompt, which alerts the user to the presence of the item of baggage 7a, b to which the transmitter unit 5a, b is associated.

Typically, this proximity occurs when the items of baggage 7a, b are delivered onto a baggage carousel 9. Until the user is alerted to the presence of an item of baggage 7a, b, the user need not approach the carousel 9, which is often very crowded, and, the user need only approach the carousel 9 when alerted to the presence of an item of baggage 7a, b.

Another application is in the identification of the items of baggage 7a, b when unloaded, for example, into lots in a facility which has no baggage handling system, and the user can identify his/her items of baggage 7a, b by moving into proximity with the items of baggage 7a, b.

In this embodiment the transmitter units 5a, b are located within the items of baggage 7a, b.

In other embodiments the transmitter units 5a, b can be built in to the items of baggage 7a, b, or otherwise attached to the items of baggage 7a, b, such as in the form of a baggage tag.

In this embodiment the transmitter units 5a, b include a replaceable or re-chargeable battery source, but in another embodiment the transmitter units 5a, b can be single-use devices.

In one embodiment the transmitter units 5a, b can each include a movement sensor, which provides for transmission of the identification signals S₁, S₂ only for a predetermined period following the items of baggage 7a, b being stationary, such as following being put in the hold of a plane, and commencement of transmission of the identification signals S₁, S₂ following subsequent movement, such as when being removed from the hold of the plane. In this way, the transmitter units 5a, b need not be operative to transmit the identification signals S₁, S₂ when being transported, such as when in the hold of a plane.

Finally, it will be understood that the present invention has been described in its preferred embodiment and can be modified in many different ways without departing from the scope of the invention as defined by the appended claims.

## Claims

1. A system for alerting a user to the presence of objects, preferably items of baggage, when within a predetermined proximity of the user, wherein the system comprises at least one object which includes a Bluetooth (RTM) transmitter which transmits a pre-assigned identification signal, and a mobile telephone which incorporates a Bluetooth (RTM) module which is operative to receive the pre-assigned identification signal from the transmitter of the at least one object when within a predetermined proximity of the user and provide the user with a prompt to the presence of the at least one object in response to receipt of the pre-assigned identification signal.

2. The system of claim 1, wherein the prompt is one or both of a visual or an audible prompt.

3. The system of claim 1 or 2, wherein the transmitter is located within the object, built in to the object or attached to the object, such as in the form of a tag.

4. The system of any of claims 1 to 3, wherein the transmitter is a re-usable device and includes a replaceable or re-chargeable power source or is a single-use device.

5. The system of any of claims 1 to 4, wherein the transmitter includes a movement sensor which is operative to control the transmission of the pre-assigned identification signal.

6. The system of claim 5, wherein the movement sensor is operative such that the identification signal is transmitted only for a predetermined period following becoming stationary and transmission of the pre-assigned identification signal is commenced following subsequent movement.

7. A method of alerting a user to the presence of objects, preferably items of baggage, when within a predetermined proximity of the user, the method comprising the steps of:
providing at least one object with a Bluetooth (RTM) transmitter which transmits a pre-assigned identification signal;
providing a user with a mobile telephone which incorporates a Bluetooth (RTM) module which is operative to receive the pre-assigned identification signal from the transmitter of the at least one object when within a predetermined proximity of the user and
provide the user with a prompt to the presence of the at least one object in response to receipt of the pre-assigned identification signal; and
alerting the user with a prompt to the presence of the at least one object in response to receipt of the pre-assigned identification signal by the mobile telephone.

8. The method of claim 7, wherein the prompt is one or both of a visual or an audible prompt.

9. The method of claim 7 or 8, wherein the transmitter is located within the object, built in to the object or attached to the object, such as in the form of a tag.

10. The method of any of claims 7 to 9, wherein the transmitter is a re-usable device and includes a replaceable or re-chargeable power source or is a single-use device.

11. The method of any of claims 7 to 10, wherein the transmitter includes a movement sensor which is operative to control the transmission of the pre-assigned identification signal.

12. The method of claim 11, further comprising the steps of:
transmitting the pre-assigned identification signal only for a predetermined period following the movement sensor detecting the object becoming stationary; and
commencing transmission of the pre-assigned identification signal following the movement sensor detecting subsequent movement of the object.

13. The method of claim 12, wherein the at least one object is an item of baggage, and further comprising the step of:
delivering the at least one item of baggage onto a baggage conveyor, such as a baggage carousel;
wherein the user is alerted to the at least one item of baggage being in the predetermined proximity of the user when approaching or being delivered onto the baggage conveyor.

14. The method of claim 12, further comprising the step of:
delivering the at least one item of baggage to a location in a facility; and
the user moving with the mobile telephone to the at least one item of baggage;
wherein the user is alerted to the at least one item of baggage being in the predetermined proximity of the user when the user moves within the predetermined proximity to the at least one item of baggage.

15. A baggage tag incorporating a Bluetooth (RTM) transmitter for transmitting an identification signal pre-assigned to a mobile telephone.
